# EUROPÄISCHE PATENTSCHRIFT

(11) **EP 2 593 515 B1**
(45) Veröffentlichungstag und Bekanntmachung des Hinweises auf die Patenterteilung: **17.04.2019**
(21) Anmeldenummer: 11725447.4
(22) Anmeldetag: 15.06.2011
(51) Int. Cl.: C08L 83/06, C08L 83/08, C08L 83/10, B29C 33/64, C07F 9/09

(54) **VERFAHREN ZUR HERSTELLUNG VON FORMKÖRPERN AUS CELLULOSE ENTHALTENDEN MATERIALIEN**
METHOD FOR PRODUCING MOLDED BODIES MADE OF MATERIALS CONTAINING CELLULOSE
PROCÉDÉ DE FABRICATION DE CORPS MOULÉS À PARTIR DE MATÉRIAUX CONTENANT DE LA CELLULOSE

(30) Priorität: 15.07.2010 DE 102010031376
(43) Veröffentlichungstag der Anmeldung: 22.05.2013
(73) Patentinhaber: Evonik Degussa GmbH, 45128 Essen (DE)
(72) Erfinder: BALBO BLOCK, Maike Vivian, 22043 Hamburg (DE); HABECK, Nadine, 23923 Schönberg (DE); LÜTHGE, Thomas, 19086 Consrade (DE)
(74) Vertreter: Evonik Patent Association
(86) Internationale Anmeldenummer: PCT/EP2011/059911
(87) Internationale Veröffentlichungsnummer: WO 2012/007242

(56) Entgegenhaltungen:
- EP-A1- 1 484 347
- EP-A1- 1 719 597

## Beschreibung

Gegenstand der Erfindung ist ein Verfahren zur Herstellung von kompakten cellulosehaltigen Formkörpern durch Umsetzung von gegebenenfalls modifizierten organischen Polyisocyanaten mit cellulosehaltigen, insbesondere lignocellulosehaltigen Stoffen, in Gegenwart von Formtrennmitteln in einem offenen oder geschlossenen Formwerkzeug, wobei ein Formtrennmittel eingesetzt wird, welches spezielle funktionalisierte Alkyl- oder Alkoxygruppen aufweisende Siloxanverbindungen und mindestens ein Phosphat bzw. Phosphorsäureester enthalten, entsprechende Formtrennmittel und die mit dem erfindungsgemäßen Verfahren erhältlichen Formkörper.

Die Herstellung komprimierter, geformter, als "Composites" bezeichneter Formteile aus Holzstückchen, -fasern oder -partikel wie etwa OSB (oriented strand board)-Platten, Spanplatten, Faserplatten, Sperrholz aber auch Korkplatten sowie Formkörpern aus Flachs, Stroh oder anderen cellulosehaltigen Werkstoffen, mit Isocyanatbindern, gegebenenfalls in Gegenwart oder Abwesenheit von Katalysatoren, Hilfsmitteln und/oder Zusatzstoffen in einem offenen oder geschlossenen Formwerkzeug ist bekannt aus zahlreichen Patent- und Literaturveröffentlichungen.

Bei diesen Prozessen sind Temperaturen von 90 bis 270 °C nötig, um die Reaktion der Isocyanatbinder mit dem cellulosehaltigen Material zu gewährleisten und eine Verformung der Werkstoffe zu der gewünschten Endform wie beispielsweise Bretter oder Platten zu ermöglichen.

Obgleich die Herstellung von kompakten Cellulose/Isocyanat-Formkörpern eine große technische Bedeutung erlangt hat, weisen die beschriebenen Verfahren, z.B. wegen der hervorragenden Adhäsion von Polyurethanen zu anderen Werkstoffen, auch technische Mängel auf. Nachteilig ist insbesondere, dass die Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte, metallische Formwerkzeuge verwendet und/oder Trennmittel mitverwendet.

Diese Formtrennmittel werden entweder in die härtbare Cellulose-Isocyanatmischung als interne Trennmittel eingesetzt oder die Formwerkzeuginnenflächen werden vor der Herstellung der Formkörper mit einem (gleichmäßigen) Überzug aus äußeren Trennmitteln versehen, wofür u. a. verschiedene spritz- und sprühtechnische Verfahren aus dem Stand der Technik bekannt sind. Es besteht auch die Möglichkeit, die Oberfläche der Holzspäne oder Fasern mit Formtrennmittel zu beschichten. Dies erfolgt ebenfalls durch Sprühauftrag.

Als konventionelle interne oder externe Trennmittel werden beispielsweise Fettsäuren und deren Metallsalze (WO-A-03/072324, WO-A-02/36268), polymere Fettsäuren (EP-A-0 269 869), carboxyfunktionalisierte Siloxane (EP-B-0 129 430), Wachse (EP-B-0 046 014), speziell Esterwachs (EP-B-0 057 502), oxidierter Wachs (WO-A-00/53381) oder Polyolefinwachs (WO-A-98/00464), Polyolefinwachs in Kombination mit Fettsäuren (WO-A-01/58998) oder schließlich Fettsäuren oder Wachssäuren in Kombination mit Polysiloxanen verwendet, die mit einer organisch gebundenen aktiven Wasserstoffgruppe modifiziert sind und in der Lage sind, mit Isocyanat zu reagieren (WO-A-03/008164).

Solche konventionellen Trennmittel zeigen den Nachteil, dass die fertigen Formkörper an der Oberfläche dunkle Verfärbungen zeigen, die die optische Wertigkeit stark beeinträchtigen. Weiterhin zeigen die Pressbleche häufig schwarze Aufbaurückstände. Dies liegt daran, dass die konventionell eingesetzten Trennmittel bei den im Prozess verwendeten Temperaturen nicht thermisch oder oxidativ stabil sind und/oder dazu neigen, auf den Metallblechen harte, meist schwarze feste Aufbaurückstände erzeugen.

Diese Aufbaurückstände können sich auch wieder auf den hergestellten Formkörper ablagern und auch auf diese Weise zu dunklen Verfärbungen und/oder Unregelmäßigkeiten in deren Oberflächenstruktur führen oder, insbesondere bei siliconhaltigen Trennmitteln, zu erheblichen Lackierproblemen führen. Teilweise ist dadurch eine Nachbehandlung wie Abschleifen der Oberfläche nötig.

Die zurzeit industriell eingesetzten Trennmittel zum Entformen von Formteilen enthalten üblicherweise in einem Träger dispergierte trennwirksame Substanzen.

Als Träger werden in der Regel organische Lösungsmittel oder Wasser verwendet. Dabei dienen diese nicht nur als Träger für die trennaktiven Werkstoffe und als Lösungsmittel für weitere Additive, sondern auch zum Einstellen einer optimalen Konzentration, als Hilfsmittel beim Benetzen und Verlauf und bei der Bildung des Trennmittelfilmes sowie zur Beeinflussung der Polyurethan-Formteiloberfläche. Betriebssicherheit, Wirtschaftlichkeit und ökologische Unbedenklichkeit sind weitere Anforderungen an den Träger.

Das stark gestiegene Interesse am Umweltschutz und die damit einhergehenden verschärften gesetzlichen Bestimmungen führen zu dem Bestreben, flüchtige organische Bestandteile wie z.B. Lösungsmittel (sog. VOCs) auf ein vertretbares Minimum zu reduzieren.

Die zurzeit industriell eingesetzten Trennmittel zum Entformen von Formteilen enthalten üblicherweise in einem Träger dispergierte trennwirksame Substanzen, wie bspw. Öle, Wachse, Silicone und/oder Seifen.

Die EP-A-0 207 192 beschreibt Siliconharze als semipermanente Trennmittel für die Pressbleche, welche auf den Pressblechen aushärten und mehrmalige Entformungen ermöglichen. Diese Schrift erwähnt aminofunktionalisierte Siloxane in Kombination mit Siliconharzen und wonach das Trennmittel eine gewisse Verträglichkeit mit der Harzmatrix erhalten soll, die eine Einbindung in die Matrix gewährleistet. Die bereits beschriebenen Probleme der Bildung dunkler Aufbaurückstände auf den Pressblechen werden jedoch auch mit diesem Trennmittel nicht behoben.

Die DE-C-19 738 192 beschreibt Trennmittel für Formen zur Herstellung von Formkörpern aus Kunststoffen, aufgebaut auf flüchtigen Polysiloxanen der Kettenlängen 7 bis 13, in denen 0,1 bis 5,0 Gew.-% eines γ-Aminopropylgruppen enthaltenden Polysiloxans mitverwendet wird. Das Trennmittel wird bei Raumtemperatur oder Temperaturen bis 50 °C eingesetzt.

DE 10 2005 021 059 beschreibt die Verwendung von Trennmitteln, die aminofunktionalisierte Siloxane enthalten, für die Herstellung von Lignocellulose enthaltenden Formkörpern. Bei dem Prozess werden Temperaturen von 180 bis zu 270 °C verwendet.

In der noch nicht publizierten DE 10 2009 047 764 werden Trennmittel, insbesondere für die Herstellung von OSB-Platten beschrieben, die als trennaktives Material Phosphate bzw. Phosphatester und mindestens eine zwei Hydroxyl-Gruppen aufweisende Verbindung mit einem Molekulargewicht von kleiner 250 g/mol aufweisen.

Insbesondere bei der Herstellung von OSB-Platten sind zurzeit relativ hohe Mengen an trennaktiven Substanzen bezogen auf die Trennmittelzusammensetzung notwendig um eine vollständige Trennung zu erzielen.

Eine Aufgabe der vorliegenden Erfindung war deshalb die Bereitstellung von Trennmittelzusammensetzungen, die mit einer geringeren Konzentration an trennaktiven Substanzen auskommen, ohne dass Verfärbungen oder Aufbaurückstände an den OSB-Platten zu beobachten sind.

Eine weitere Aufgabe war es, Trennmittel zu finden, die vorzugsweise auch im Falle der Ablösung von der Metallpresse auf dem Formkörper verbleiben können, ohne dass sich dort Verfärbungen bilden oder die gegebenenfalls weiteren Bearbeitungsschritte (Lackierbarkeit) beeinträchtigt werden.

Überraschenderweise wurde gefunden, dass Trennmittel, die funktionalisierte Alkyl- oder Alkoxygruppen aufweisende Siloxanverbindungen der allgemeinen Formel (I) und mindestens ein Phosphat bzw. Phosphorsäureester der allgemeinen Formel (II) aufweisen die vorgenannte Aufgabe lösen.

Gegenstand der vorliegenden Erfindung sind deshalb Trennmittel, ein Verfahren zur Herstellung von Formkörpern unter Verwendung dieser Trennmittel sowie die entsprechend hergestellten Formkörper und deren Verwendung.

Die erfindungsgemäßen Trennmittel haben den Vorteil, dass bei ihrer Verwendung mit einer deutlich geringeren Menge an trennaktiven Substanzen ein Trenneffekt erreicht wird, wie dieser bei Trennmitteln nach dem Stand der Technik nur durch die Verwendung von höheren Konzentrationen erreicht werden kann.

Das erfindungsgemäße Trennmittel hat außerdem den Vorteil, dass durch seinen Einsatz eine ebenso wie in DE 10 2009 047 764 beschriebene Erhöhung der Verarbeitungsgeschwindigkeit, insbesondere bei kontinuierlichen Herstellverfahren, erreicht werden kann.

Die erfindungsgemäßen Trennmittel, eine Verfahren zur Herstellung von Formkörpern, bei dem diese Trennmittel eingesetzt werden, sowie entsprechend hergestellte Formkörper und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen WO 2012/007242PCT/EP2011/059911 umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Sind nachfolgend Angaben in Prozent angegeben, so handelt es sich, wenn nicht anders angegeben um Gewichtsprozent. Sind nachfolgend Mittelwerte angegeben, so handelt es sich, wenn nicht anders angegeben, um Zahlenmittel.

Das erfindungsgemäße Trennmittel zeichnet sich dadurch aus, dass es mindestens eine funktionalisierte Alkyl- oder Alkoxygruppe aufweisende Siloxanverbindung der allgemeinen Formel (I) 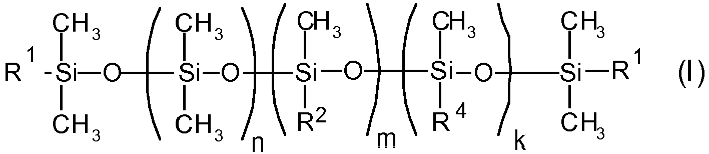 mit
- R¹: = gleich oder verschieden CH₃ und/oder R²,
- R²: = gleich oder verschieden, vorzugsweise gleich, -(CH₂)ₐ-NH-R³, -(O)ₓ-(CH₂)_{b}-NH-R^{3'},-O_{y}-(CH₂)_{c}-OH und/oder -O_{z}-(CH₂)_{d}-COOX¹, vorzugsweise -(CH₂)ₐ-NH-R³ und/oder, bevorzugt oder -(O)ₓ-(CH₂)_{b}-NH-R^{3'}
X¹ = H, Alkalimetall, Erdalkalimetall
R³, R^{3'} = unabhängig voneinander H oder -(CH₂)ₑ-NH₂,
a, b, c, d, e = unabhängig voneinander 1 bis 20, bevorzugt 1 bis 10 und ganz besonders bevorzugt 1 bis 5,
x, y, z = unabhängig voneinander 0 oder 1,
- R⁴: = -(CH₂)_{f}-NH-(CH₂-CH₂-O)_{z}-R⁵ mit
R⁵ = H, Aryl- oder Alkylrest,
f = 1 bis 20, bevorzugt 2 bis 5, besonders bevorzugt 3,
z = 1 bis 20, bevorzugt 1 oder 2 bis 10,
- n: = 50 bis 1.000, bevorzugt 100 bis 500, insbesondere 100 bis 200
- m: = 1 bis 20, bevorzugt 0 bis 5 mit dem Verhältnis m : n = 0 bis 0,4 bevorzugt 0,01 bis 0,1,
- k: = 0 bis 20, bevorzugt 0 bis 5,
mit der Maßgabe, dass mindestens ein Rest R² oder R⁴, vorzugsweise mindestens ein Rest R² vorhanden ist,
und mindestens ein Phosphat und/oder Phosphorsäureester der allgemeinen Formel (II) 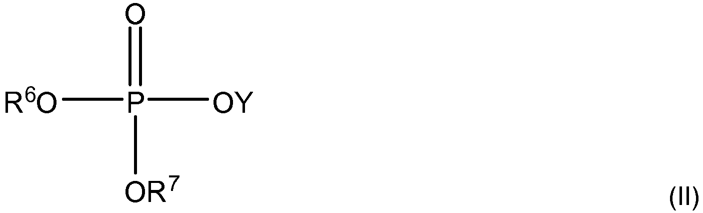 mit
Y = R¹¹, H, Metall, vorzugsweise Alkalimetall, bevorzugt Na oder K, oder Erdalkalimetall, wie z. B. Mg, Ba, Sr oder Ca, bevorzugt Ca, NRₚH₄₋ₚ⁺, mit p = 0 bis 4, vorzugsweise 2 oder 3 , und R = Kohlenwasserstoffrest mit 1 bis 10, bevorzugt 1 bis 4 Kohlenstoffatomen oder ein Rest der Formel (III) 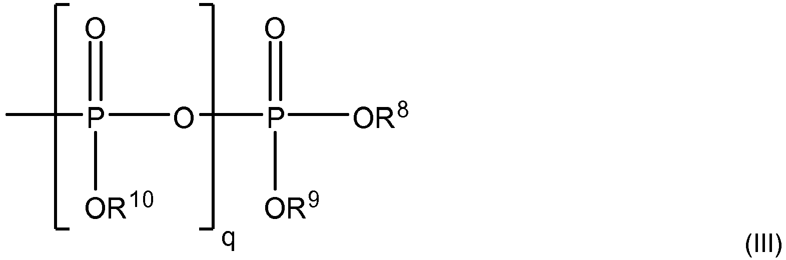 mit
q = 0 bis 5, und
R⁶ bis R¹¹ unabhängig voneinander Wasserstoff, ein Metall, vorzugsweise ein Alkalimetall, wie zum Beispiel Natrium oder Kalium, oder Erdalkalimetall , wie z. B. Mg, Ba, Sr oder Ca, bevorzugt Ca, oder NRₚH₄₋ₚ⁺ mit p und R wie zu Formel II beschrieben, oder ein organischer Rest, enthält.

Die verschiedenen Monomereinheiten der in der Formel (I) angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte (Zahlenmittel) zu betrachten.

Es kann vorteilhaft sein, wenn die erfindungsgemäße Zusammensetzung Siloxane der Formel (I) enthält, die selbstemulgierend sind. Dies ist in der Regel dann der Fall, wenn in der allgemeinen Formel (I) k die Bedeutung ≥ 1, vorzugweise > 2 hat. Vorzugsweise ist f gleich 2 bis 4, bevorzugt 3. und z = 2 bis 10 und R⁵ ein H oder Methylrest. Zusammensetzungen, die mindestens ein entsprechendes Siloxan aufweisen sind wegen ihrer selbstemulgierenden Wirkung besonders bevorzugt, insbesondere deshalb, weil auf die weitere Zugabe von nicht trennaktive Substanzen (mit Ausnahme von Lösungsmitteln), die bei den hohen Anwendungstemperaturen zu Verfärbungen führen könnten, verzichtet werden kann.

Handelt es sich bei (einem oder mehreren) den Resten R⁶ bis R¹¹ um organische Reste, so können diese gleich oder verschieden sein. Vorzugsweise sind die organischen Reste R⁶ bis R1¹ ausgewählt aus, verzweigten oder unverzweigten, acyclischen oder cyclischen, alicyclischen oder heterocyclischen, aliphatischen oder aromatischen oder heteroaromatischen, substituierten oder unsubstituierten, organischen Resten, bevorzugt ein linearer aliphatischer gesättigter und/oder ungesättigter Rest mit 1 bis 25, vorzugsweise 12 bis 18 Kohlenstoffen, oder Resten der Formel (IV) 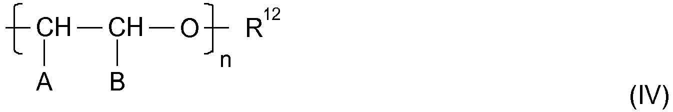 mit
R¹² = verzweigter oder unverzweigter, acyclischer oder cyclischer, alicyclischer oder heterocyclischer, aliphatischer oder aromatischer oder heteroaromatischer, substituierter oder unsubstituierter organischer Rest, bevorzugt ein linearer aliphatischer gesättigter und/oder ungesättigter Rest mit 1 bis 25, vorzugsweise 12 bis 18 Kohlenstoffen,
A oder B gleich Wasserstoff und der jeweilige andere Rest gleich Wasserstoff oder ein substituierter oder unsubstituierter, linearer oder verzweigter Alkylrest mit 1 bis 10 Kohlenstoffatomen oder ein Arylrest, vorzugsweise ein Phenylrest, vorzugsweise ein Phenyl-, Ethyl- oder Methylrest, bevorzugt ein Methylrest, und n eine zahlengemittelte Zahl von 1 bis 100, vorzugsweise 2 bis 10 ist.

Handelt es sich bei einem oder mehreren der Reste R⁶ bis R¹² um einen cyclischen Rest, insbesondere einen alicyclischen Kohlenwasserstoffrest, so kann dieser z. B. ein Cycloalkyl- oder Cycloalkenylrest sein. Handelt es sich bei einem oder mehreren der Reste R⁶ bis R¹² um einen heterocyclische Rest, so weist dieser vorzugsweise Stickstoff, Kohlenstoff und ggf. weitere Heteroatome auf. Der heterocyclische Rest kann z. B. ein drei-, vier-, fünf-, sechs- oder höhergliedriger Ring sein, der wiederum durch H, Alkyl- oder Arylgruppen mit Akzeptor- beziehungsweise Donatorsubstituenten oder Teilen von cyclischen Systemen mit Akzeptor- beziehungsweise Donatorsubstituenten und/oder hydrophilen beziehungsweise hydrophoben Gruppen substituiert sein kann. Besonders bevorzugt ist der heterocyclische Rest ein Pyrrolidinyl-, Pyrrolinyl-, Piperidinyl- oder Morpholinylrest ein. Handelt es sich bei einem oder mehreren der Reste R⁶ bis R¹² um einen Arylrest, so kann dieser z. B. Phenyl-, Naphthyl- oder Anthracenylrest sein. Handelt es sich bei einem oder mehreren der Reste R⁶ bis R¹² um einen Heteroarylrest, so kann dieser vorzugsweise ein Imidazolyl-, Pyrazolyl-, Pyridinyl-, Thienyl-, Thiazolyl-, Furyl- oder Indolylrest sein. Die Reste R⁶ bis R¹² können auch solche organische Reste sein, bei denen ein oder mehrere der Reste R⁶ bis R¹² miteinander verknüpft sind.

Es kann vorteilhaft sein, wenn als Komponente der Formel (II) mindestens ein anorganisches Phosphat, bei welchem R⁶ und R⁷ bzw. falls anwendbar (wenn Y = Rest der Formel (III)) R⁶ bis R¹⁰ keine organischen Reste sind, enthalten ist. Bevorzugte anorganische Phosphate sind solche, bei denen Y ein Rest der Formel (III) ist und bei denen m = 1 bis 3, vorzugsweise 1 oder 2 ist und die Reste R⁶ bis R¹⁰ gleich oder unterschiedlich H, NH₄⁺, K oder Na, vorzugsweise Na oder K sind.

Es kann des Weiteren vorteilhaft sein, wenn als Komponente der Formel (II) mindestens ein organisches Phosphat, bei welchem mindestens einer der Reste R⁶ oder R⁷ bzw. falls anwendbar (wenn Y = Rest der Formel (III)) mindestens einer der Reste R⁶ bis R¹⁰ nicht H, Metall oder NRₚH₄₋ₚ⁺, mit R und p wie oben definiert, ist, enthalten ist. Bevorzugte organische Phosphate sind solche der Formel (II), bei denen Y = H, NH₄⁺, K oder Na, insbesondere K, und mindestens einer oder beide der Reste R⁶ oder R⁷, bevorzugt nur einer der Reste ein Alkyl- oder Alkenylrest, vorzugsweise ein Alkyl- oder Alkenylrest mit 10 bis 25, bevorzugt 12 bis 18 Kohlenstoffatomen, besonders bevorzugt ein Oleyl- oder Stearylrest ist, und der andere Rest ggf. H, NH₄⁺, K oder Na, insbesondere K ist.

Bevorzugte erfindungsgemäße Zusammensetzungen sind solche, die ein anorganisches Phosphat der Formel (II) aufweisen, bei welchem R⁶, R⁷ und Y bzw. falls anwendbar (wenn Y = Rest der Formel (III)) R⁶ bis R¹⁰ keine organischen Reste sind und mindestens ein organisches Phosphat, bei welchem mindestens einer der Reste R⁶, R⁷ oder Y bzw. falls anwendbar (wenn Y = Rest der Formel (III)) mindestens einer der Reste R⁶ bis R¹⁰ nicht H, Metall oder NRₚH₄₋ₚ⁺, mit R und p wie oben definiert, ist.

Besonders bevorzugte erfindungsgemäße Zusammensetzungen sind solche, die als Komponente a) kein Phosphat der Formel (II) aufweisen, bei dem alle Reste R⁶, R⁷ und Y bzw. falls anwendbar (wenn Y = Rest der Formel (III)) alle Reste R⁶ bis R¹¹ organischen Reste sind.

Ganz besonders bevorzugte erfindungsgemäße Zusammensetzungen sind solche, die als Verbindungen der Formel (II) ein Alkalipolyphosphat, z. B. Natrium Tripolyphosphat, und/oder Alkali Mono- und/oder Di-Alkyl- oder Alkenylphosphat, z. B. Kalium-Mono-/Di-Oleylphosphat enthalten.

In der erfindungsgemäßen Zusammensetzung beträgt das Massenverhältnis von Verbindungen der Formel (I) zu Verbindungen der Formel (II) vorzugsweise von 80 : 20 bis 20 : 80, bevorzugt von 60 : 40 bis 40 : 60 und besonders bevorzugt von etwa 50:50.

Optional kann die erfindungsgemäße Formtrennmittelzusammensetzung eine, zumindest zwei Hydroxyl-Gruppen aufweisende Verbindung mit einem Molekulargewicht von kleiner 250 g/mol, enthalten. Geeignete Verbindungen sind insbesondere ausgewählt aus den ein oder mehrere Diole, Triole und/oder mehrwertigen Polyolen. Bevorzugt enthält der erfindungsgemäße Zusammensetzung als zumindest zwei Hydroxyl-Gruppen aufweisende Verbindung mit einem Molekulargewicht von kleiner 250 g/mol eine oder mehrere Verbindungen ausgewählt aus der Gruppe umfassend Monoethylenglykol, Diethylenglykol, Triethylenglykol, Tetraethylenglykol, Propylenglykol, Butylenglykol, Glyzerin, Trimethylolpropan und Pentaerythrit.

Das Massenverhältnis von Verbindungen der Formel (II) zu Verbindungen mit zwei Hydroxyl-Gruppen und einem Molekulargewicht von kleiner 250 g/mol beträgt in der erfindungsgemäßen Zusammensetzung vorzugsweise von 20 zu 80 bis 80 zu 20, bevorzugt von 40 zu 60 bis 60 zu 40 und besonders bevorzugt ca. 50 zu 50.

Die erfindungsgemäße Formtrennmittelzusammensetzung kann ausschließlich aus trennaktiven Mitteln, insbesondere ausschließlich auf Verbindungen der Formeln (I) und (II) sowie ggf. Verbindungen, die zwei Hydroxylgruppen aufweisen, bestehen.

Da Zusammensetzungen aber bereits in sehr geringen Konzentrationen der trennaktiven Mittel hervorragende Trennergebnisse zeigen, können sie auch gemischt werden in Mengen von 0,1 bis 99 Gew.-%, bevorzugt 1 bis 20 Gew.-%, besonders bevorzugt 1 bis 5 Gew.-% mit organischen und anorganischen Lösungsmitteln, wobei solche erfindungsgemäße Zusammensetzungen weitere Hilfs- und/oder Zusatzstoffe enthalten können. Bevorzugte Trennmittelzusammensetzungen weisen einen Anteil an Lösemittel, vorzugsweise anorganisches Lösemittel, bevorzugt Wasser, von 1 bis 99 Gew.-%, bevorzugt 80 bis 98 Gew.-%, besonders bevorzugt von 85 bis 98 Gew.-% und ganz besonders bevorzugt von 95 bis 98 Gew.-% auf. Vorzugsweise ist die erfindungsgemäße Zusammensetzung eine Dispersion, die von 1 bis 99 Gew.-% Wasser bezogen auf die Gesamtzusammensetzung aufweist.

Organische Lösungsmittel sind weniger bevorzugt, da sie niedrige Zündpunkte zeigen und sich im Bereich der Anwendungstemperaturen entzünden können. Besser geeignet sind cyclische oder lineare Siloxane, wobei nur solche Siloxane in Frage kommen, deren Zündpunkt oberhalb der verwendeten Anwendungstemperaturen liegen.

Zur Vermeidung von großen Transportvolumina kann es vorteilhaft sein, die erfindungsgemäße Trennmittelzusammensetzung ohne oder nur mit geringen Mengen an Lösemittel zu lagern und zu transportieren und erst kurz vor oder bei der Verwendung durch Zugabe von Lösemittel auf die genannten bevorzugten Lösemittelkonzentrationen zu verdünnen.

Die in der erfindungsgemäßen Zusammensetzung beschriebenen Verbindungen der Formeln (I) und (II) können nach den im Stand der Technik bekannten Verfahren hergestellt werden und können in dieser Form ohne weitere Aufbereitungsschritte zur Herstellung der erfindungsgemäßen Zusammensetzung verwendet werden. Verbindungen der Formel (I) werden u. a. in EP 1 719 597, US 2010 0048444, WO 02/057380 oder US 2004 0146654 beschrieben. Verbindungen der Formel (II) werden u. a. in DE 2932175, US 4,257,995 und DE 3108537 beschrieben. Verbindungen der Formel (IV) werden u. a. in GB 1148016 beschrieben.

Es kann vorteilhaft sein, wenn die erfindungsgemäße Zusammensetzung als weitere Komponente ein Alkalihydroxid aufweist. Vorzugsweise enthält die Zusammensetzung ein Alkalihydroxid ausgewählt aus NaOH und KOH, bevorzugt in Form einer wässrigen Lösung.

Die erfindungsgemäße Trennmittelzusammensetzung oder, falls die Trennmittelzusammensetzung kein Wasser enthält eine wässrige Lösung von 10 Gew.-% Trennmittelzusammensetzung in Wasser, weist vorzugsweise einen pH-Wert, gemessen mittels pH-Teststreifen (welche für den pH-Wertbereich von 7,5 bis 9,5 z. B. von der Firma Marcherey-Nagel als pH-Fix 7,5 - 9,5 angeboten werden) von größer-gleich 7 bis 14, bevorzugt 7 bis 10 und besonders bevorzugt 8 bis 9 auf. Der pH-Wert der erfindungsgemäßen Zusammensetzung kann durch Zugabe von Alkalihydroxid(-Lösung), organische Säuren, wie z. B. Essigsäure und/oder Mineralsäuren, vorzugsweise Phosphorsäure eingestellt werden.

Als weitere Komponenten können die erfindungsgemäßen Zusammensetzungen weitere übliche Hilfs- und/oder Zusatzstoffe aufweisen. Als Hilf- bzw. Zusatzstoffe können in der erfindungsgemäßen Zusammensetzung insbesondere enthalten sein:
A) Emulgatoren: Anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie Fettalkohole, ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside oder Kombinationen der Emulgatoren. Der Anteil an Emulgatoren an der gesamten erfindungsgemäßen Zusammensetzung beträgt vorzugsweise von 0,1 bis 10 Gew.-%, bevorzugt 0,5 bis 6 Gew.-%.
B) Katalysatoren: Als Katalysatoren können solche verwendet werden, die typischerweise für die Reaktion des Bindemittels verwendet werden. Für die Polyurethanreaktion geeignete Katalysatoren können z. B. Lewis-Säuren wie beispielsweise Zinnverbindungen oder Lewis-Basen wie beispielsweise tertiäre Amine sein. Zur Katalyse bei als Bindemittel eingesetzten Formaldehydharzen können z. B. Ammoniumsalze wie z. B. Ammoniumsulfat oder Peroxide verwendet werden.
C) Viskositätsmodifizierer: Als Viskositätsmodifizierer können z. B. typische Verdicker wie als Carbomere bezeichnete Polyacrylsäurederivate oder andere Polyelektrolytverdicker wie wasserlösliche Cellulosen oder Xanthangum in der erfindungsgemäßen Zusammensetzung enthalten sein.
D) Konservierungsmittel, Bakterizide und/oder Fungizide.
E) Handelsübliche Antioxidantien und Entschäumer.
F) Antistatika: Handelsübliche Zusätze zur Beeinflussung der Leitfähigkeit, wie antistatisch wirkende Zusätze oder die Leitfähigkeit erhöhende Zusätze.

Die erfindungsgemäße Zusammensetzung kann als Emulsion und/oder Dispersion und/oder Lösung vorliegen. In einer besonders bevorzugten Ausführungsform liegt die erfindungsgemäße Formtrennmittelzusammensetzung in Form einer Emulsion vor.

Zur Herstellung einer erfindungsgemäßen Zusammensetzung kann jede dafür geeignete, bekannte Methode verwendet werden.

Um eine erfindungsgemäße Emulsion herzustellen, kann jede bekannte Methode verwendet werden, bevorzugt geht man so vor, dass der Emulgator mit den Siloxanverbindungen der Formel (I) vorgelegt wird, scherkraftreich ein Teil des Wassers eingetragen wird, und dann das restliche Wasser scherkraftarm zugegeben wird.

Die erfindungsgemäßen Formtrennmittelzusammensetzungen können in allen Verfahren, bei denen Formtrennmittel eingesetzt werden, verwendet werden. Die erfindungsgemäßen Zusammensetzungen können als interne oder externe, vorzugsweise als externe Trennmittel eingesetzt werden. Vorzugsweise wird die erfindungsgemäße Trennmittelzusammensetzung in dem nachfolgend beschriebenen erfindungsgemäßen Verfahren eingesetzt.

Das erfindungsgemäße Verfahren zur Herstellung eines Kompositformkörpers durch kontinuierliches oder diskontinuierliches Verpressen einer Masse enthaltend mindestens ein organisches Bindemittel und mindestens ein Material, welches in Form von Spänen, Fasern, Matten, Pulvern oder Granulaten vorliegt, zeichnet sich dadurch aus, dass das Pressen in Gegenwart einer erfindungsgemäßen Formtrennmittelzusammensetzung erfolgt.

Die erfindungsgemäße Formtrennmittelzusammensetzung kann dabei als internes Trennmittel (Einarbeitung der Trennmittelzusammensetzung in die zu verpressende Masse) oder als externes Trennmittel (Aufbringen der Trennmittelzusammensetzung auf die zu verpressende Masse oder auf die Form) eingesetzt werden. Vorzugsweise wird die erfindungsgemäße Trennmittelzusammensetzung als externes Trennmittel eingesetzt.

Wird die Trennmittelzusammensetzung als externes Trennmittel eingesetzt, wird diese vorzugsweise mit einer gängigen Auftragungsmethode, z. B. durch Sprühen oder Walzenauftragung auf die zu pressende Masse oder die Pressform bzw. das Pressblech aufgetragen.

Wird das erfindungsgemäße Verfahren kontinuierlich durchgeführt, so erfolgt die Formgebung vorzugsweise durch Pressbleche und/oder Presswalzen. Die Geschwindigkeit, mit welcher die zu pressende Masse bewegt wird, beträgt vorzugsweise von 0,5 bis 500 m/min, bevorzugt von 10 bis 100 m/min und besonders bevorzugt von 15 bis 50 m/min.

Als organisches Bindemittel werden in dem erfindungsgemäßen Verfahren vorzugsweise Isocyanate, Polyisocyanate, Harnstoff/Formaldehyd-, Phenol/Formaldeyd, Melamin/Formaldehyd, Epoxid (EP), Polyurethan-, Polyester- und/oder Polylactidharze verwendet. Besonders bevorzugt werden als Bindemittel Polyisocyanate, insbesondere Diphenylmethandiisocyanat (MDI) oder polymeres Diphenylmethandiisocyanat (PMDI), eingesetzt.

Als Material zur Herstellung der zu verpressenden Masse wird vorzugsweise ein cellulosehaltiges, bevorzugt lignocellulosehaltiges oder ein aus Cellulose, bevorzugt Lignocellulose bestehendes Material eingesetzt.

Das erfindungsgemäße Verfahren kann wie im Stand der Technik beschrieben durchgeführt werden. Dabei wird üblicherweise das Lignocellulosematerial in Faser- oder Partikelform vorgelegt, dann mit Binder unter Erhalt einer Masse versetzt und dann in einer Metallpresse und/oder durch Anlegen eines Unterdrucks/ Vakuum geformt. Die beschriebenen Trennmittel werden vor dem Pressvorgang entweder auf die Späne bzw. die Masse oder auf die, unter Umständen bereits heißen, Metallplatten, Metallwalzen oder Formen aufgesprüht wie etwa in WO-A-02/36268 beschrieben. Schließlich wird das gepresste Material von der formgebenden Form entformt.

Das erfindungsgemäße Verfahren wird vorzugsweise so durchgeführt, dass das Presswerkzeug während des Pressvorgangs eine Temperatur abhängig vom Bindemittel von 20 bis 450 °C aufweist. Bei Isocyanten/Polyisocyanaten und Formaldehydharzen werden vorzugsweise Temperaturen von 90 bis 350 °C, bevorzugt von 180 bis 275 °C eingesetzt während beim Einsatz von Epoxidharzen als Binder vorzugsweise Temperaturen von 20 bis 150°C eingesetzt werden.

Durch das erfindungsgemäße Verfahren sind die erfindungsgemäßen Kompositformkörper erhältlich. Diese können z. B. die Form einer Platte, eines Blocks, eines Balken oder eines gegebenenfalls profilierten Strangs aufweisen. Selbstverständlich können durch Verwendung entsprechender Formen jegliche mögliche Formen erzielt werden. Bevorzugte Kompositformkörper sind z. B. OSB (oriented strand board) -Platten, Spanplatten, Faserplatten, wie z. B. MDF- oder HDF-Platten ((mitteledichte bzw. hochdichte Faserplatten), Sperrholz aber auch Korkplatten sowie Formkörpern aus Flachs, Stroh oder anderen cellulosehaltigen Werkstoffen.

Die erfindungsgemäßen Kompositformkörper können zur Herstellung von Möbeln oder Möbelteilen oder von Verpackungsmaterialien oder als Material im Hausbau und Innenausbau verwendet werden.

Die nachfolgenden Beispiele sollen den Gegenstand der vorliegenden Erfindung näher beschreiben, ohne dass die Erfindung auf diese Ausführungsformen beschränkt sein soll.

### Beispiele:

### Beispiel 1: Herstellung der Trennmittelemulsionen:

### Liste der eingesetzten Substanzen:

Genapol® X 050 = Tridecylalkoholpolyglykolether mit 5 Mol Ethylenoxid, Hersteller Clariant
Genapol® O 300 = Oleylalkoholpolyglykolether mit 30 Mol Ethylenoxid, Hersteller Clariant
Emuisogen® PN Extra = Mischung aus Fettalkoholpolyglykolethern, Hersteller Clariant
Licowachs® KPE = emulgatorhaltiger Montanesterwachs, Hersteller Clariant

### Beispiel 1a: Trennmittel 1 (nicht erfindungsgemäß):

4g Genapol® X050, 2g Genapol® O 300 und 40g aminofunktionelles Siloxan mit n = 180, m = 1 R¹ = CH₃ und R² = -(CH)ₓ-NH-R³ mit x = 3 und R³ = H und 4 g aminofunktionelles Siloxan mit n = 60, m = 2, R¹ = CH₃ und R² = -(CH)ₓ-NH-R³ mit x = 3 und R³ = -(CH₂)_{z}-NH₂ mit z = 2 wurden unter starkem Rühren mit 50 g Wasser zu einer fertigen Emulsion verrührt.

### Beispiel 1b: Trennmittel 2 (nicht erfindungsgemäß):

12g Oleylphosphat wurden mit 5,4 g einer 50% Kaliumhydroxidlösung und 82,5g Wasser zu einer Dispersion verrührt.

### Beispiel 1c: Trennmittel 3 (erfindungsgemäß):

1,2g Genapol® X050, 0,6g Genapol® O300 und 11,4g aminofunktionelles Siloxan mit n = 180, m = 1 R¹ = CH₃ und R² = -(CH)ₓ-NH-R³ mit x = 3 und R³ = H und 0,6 g aminofunktionelles Siloxan mit n = 60, m = 2, R¹ = CH₃ und R² =-(CH)ₓ-NH-R³ mit x = 3 und R³ = -(CH₂)_{z}-NH₂ mit z = 2 wurden unter starkem Rühren mit 45g Wasser verrührt. 12g Oleylphosphat wurden mit 5,4 g einer 50% Kaliumhydroxidlösung und 44 g Wasser zu einer Dispersion verrührt und in die Silikonemulsion gegeben.

### Beispiel 1d: Vergleichsbeispiel A:

Als Vergleichstrennmittel A wurden 80 g Emuisogen® PN Extra mit 400 g Licowachs® KPE bei erhöhter Temperatur unter starkem Rühren mit 50 g Wasser vermischt und dann mit 5.470 g Wasser zur fertigen Emulsion verdünnt.

### Beispiel 1e: Vergleichsbeispiel B (Beispiel Nr. 2 aus DE-C-19 738 192)

Als Vergleichstrennmittel B wurden 240 g Genapol® X 050 und 1.080 g Polysiloxan mit 10 bis 15 Einheiten und 3 g aminofunktionalisiertes Siloxan analog Formel 1 mit n = 100, m = 2, R¹ = CH₃ und R² = -(CH₂)ₓ-NH-R³ mit x = 3 und R³ = H wurden unter starkem Rühren mit 50 g Wasser vermischt und dann mit 4.617 g Wasser zur fertigen Emulsion verdünnt.

### Beispiel 2: Trennmittelversuche:

Die Trennmittelemulsionen aus den Beispielen 1a bis 1e wurden mittels einer Düse in Mengen von 30 g/m² auf die Metallpressbleche aufgetragen. Das Pressen erfolgte unter Verwendung einer Labor-Heißpresse, G. Siempelkamp GmbH & Co KG, Größe 800 x 600 mm². Die OSB-Strands wurden durch Verpressen einer Mischung von 91 Gew.-% an Holzspänen (Kiefer, Größe im Mittel ca. 0,2 x 3 x 10 cm), 5 Gew.-% an polymerem Diphenylmethandiisocyanat (PMDI) und 4 Gew.-% Wasser bei einer Temperatur von 220 °C erzeugt. Die Plattenstärke betrug 12 mm.

Die unterschiedlichen eingesetzten Trennmittel-Konzentrationen wurden durch (weiteres) Verdünnen des Trennmittels mit Wasser eingestellt.

Bei der Bewertung der Trennmittelversuche wurde mit 1 ein sehr gute Trennwirkung und mit 5 eine sehr schlechte Trennwirkung bezeichnet. Die Ergebnisse der Trennmittelversuche sind in Tabelle 1 angegeben.

**Tabelle 1: In Beispiel 2 eingesetzte Trennmittel (%-Angaben sind jeweils Gewichts-%)**

| Trennmittel | Konzentration der trennaktiven Substanzen | Trennwirkung | Aussehen des Holzwerkstoffes und der Pressplatte |
|---|---|---|---|
| 1 | 3,4% | 1 | hell, ohne Ablagerungen |
| 1 | 3,3% | 2 | hell, ohne Ablagerungen |
| 1 | 3,0% | 4 | hell, leichte Holzanhaftungen am Blech |
| 2 | 4,5% | 1 | hell, ohne Ablagerungen |
| 2 | 3,6% | 1 | hell, ohne Ablagerungen |
| 2 | 3,0% | 5 | hell, Anhaftungen |
| 3 | 3,2% | 1 | hell, ohne Ablagerungen |
| 3 | 2,9% | 1 | hell, ohne Ablagerungen |
| 3 | 2,6% | 1 | hell, ohne Ablagerungen |
| A | 8% | ok | dunkle Flecken auf der Holzplatte und dunkler Aufbau auf den Blechen |
| B | 20% | 5 da Polysiloxan sich verflüchtigt | Holzrückstände auf den Blechen |

Der Tabelle 1 ist zu entnehmen, dass mit der erfindungsgemäßen Zusammensetzung auch bei einer geringen Konzentration an trennaktiven Substanzen von kleiner 3 Gew.-% eine sehr gute Trennwirkung ohne Verfärbungen und Ablagerungen erzielt wird. Die aus dem Stand der Technik bekannten Trennmittel erreichen bereits bei Konzentration von 3 Gew.-% nicht mehr die Trennwirkung, wie sie mit der erfindungsgemäßen Zusammensetzung erzielt wird.

## Patentansprüche

1. Formtrennmittelzusammensetzung enthaltend mindestens eine funktionalisierte Alkyl- oder Alkoxygruppe aufweisende Siloxanverbindung der allgemeinen Formel (I) 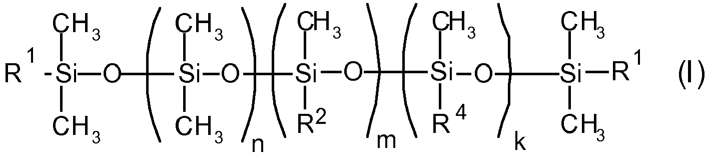 mit
R¹ = gleich oder verschieden CH₃ und/oder R²,
R² = gleich oder verschieden, vorzugsweise gleich, -(CH₂)ₐ-NH-R³,-(O)ₓ-(CH₂)_{b}-NH-R^{3'},-O_{y}-(CH₂)_{c}-OH und/oder -O_{z}-(CH₂)_{d}-COOX¹,
X¹ = H, Alkalimetall, Erdalkalimetall
R³, R^{3'} = unabhängig voneinander H oder -(CH₂)ₑ-NH₂,
a, b, c, d, e = unabhängig voneinander 1 bis 20,
x, y, z = unabhängig voneinander 0 oder 1,
R⁴ = -(CH₂)_{f}-NH-(CH₂-CH₂-O)_{z}-R⁵ mit
R⁵ = H, Aryl- oder Alkylrest,
f = 1 bis 20, bevorzugt 2 bis 5, besonders bevorzugt 3,
z = 1 bis 20, bevorzugt 1 oder 2 bis 10,
n = 50 bis 1.000,
m = 0 bis 20, bevorzugt 1 bis 5 mit dem Verhältnis m : n = 0 bis 0,4 bevorzugt 0,01 bis 0,1,
k = 0 bis 20, bevorzugt 0 bis 5,
mit der Maßgabe, dass mindestens ein Rest R² oder R⁴, vorzugsweise mindestens ein Rest R² vorhanden ist,
und mindestens ein Phosphat und/oder Phosphorsäureester der allgemeinen Formel (II) 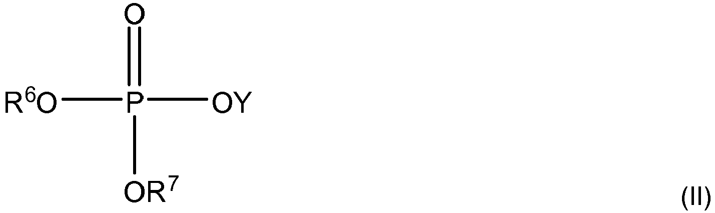 mit
Y = R¹¹, H, Metall, vorzugsweise Alkalimetall, bevorzugt Na oder K, oder Erdalkalimetall, wie z. B. Mg, Ba, Sr oder Ca, bevorzugt Ca, NRₚH₄₋ₚ⁺, mit p = 0 bis 4, vorzugsweise 2 oder 3, und R = Kohlenwasserstoffrest mit 1 bis 10, bevorzugt 1 bis 4 Kohlenstoffatomen oder ein Rest der Formel (III) 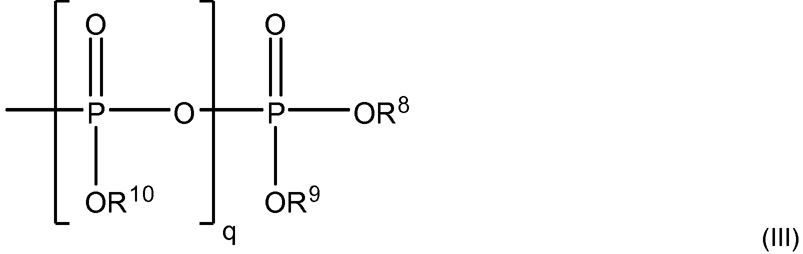 mit
q = 0 bis 5, und
R⁶ bis R¹¹ unabhängig voneinander Wasserstoff, ein Metall, vorzugsweise ein Alkalimetall, wie zum Beispiel Natrium oder Kalium, oder Erdalkalimetall , wie z. B. Mg, Ba, Sr oder Ca, bevorzugt Ca, oder NRₚH₄₋ₚ⁺ mit p und R wie zu Formel II beschrieben, oder ein organischer Rest.

2. Zusammensetzung gemäß Anspruch 1, **dadurch gekennzeichnet, dass** als Formtrennmittel Siloxanverbindungen der allgemeinen Formel (I) verwendet werden in der R¹ ausschließlich CH₃ ist.

3. Zusammensetzung gemäß Anspruch 1 oder 2, **dadurch gekennzeichnet, dass** a, b, c, d und e unabhängig voneinander 1 bis 5 ist.

4. Zusammensetzung gemäß mindestens einem der Ansprüche 1 bis 3, **dadurch gekennzeichnet, dass** n = 100 bis 500 ist.

5. Zusammensetzung gemäß mindestens einem der Ansprüche 1 bis 4, **dadurch gekennzeichnet, dass** das Verhältnis von m : n = 0,01 bis 0,1 ist.

6. Zusammensetzung gemäß mindestens einem der Ansprüche 1 bis 5, **dadurch gekennzeichnet, dass** die Zusammensetzung eine Emulsion ist, die von 1 bis 99 Gew.-% Wasser bezogen auf die Gesamtzusammensetzung aufweist.

7. Zusammensetzung gemäß mindestens einem der Ansprüche 1 bis 6, **dadurch gekennzeichnet, dass** das Massenverhältnis von Verbindungen der Formel (I) zu Verbindungen der Formel (II) von 80 : 20 bis 20 : 80 beträgt.

8. Verfahren zur Herstellung eines Kompositformkörpers durch kontinuierliches oder diskontinuierliches Verpressen einer Masse enthaltend mindestens ein organisches Bindemittel und mindestens ein Material, welches in Form von Spänen, Fasern, Matten, Pulvern oder Granulaten vorliegt, **dadurch gekennzeichnet, dass** das Verpressen in Gegenwart einer Formtrennmittelzusammensetzung gemäß einem der Ansprüche 1 bis 7 erfolgt.

9. Verfahren nach Anspruch 8, **dadurch gekennzeichnet, dass** als Bindemittel Isocyanate, Polyisocyanate, Harnstoff/Formaldehyd-, Phenol/Formaldeyd-, Melamin/Formaldehyd-, Epoxid- (EP), Polyurethan-, Polyester- und/oder Polylactidharze verwendet werden.

10. Verfahren nach Anspruch 8 oder 9, **dadurch gekennzeichnet, dass** die Trennmittelzusammensetzung auf die Pressform und/oder auf die zu pressende Masse aufgetragen wird.

11. Kompositformkörper, erhältlich nach einem Verfahren gemäß einem der Ansprüche 8 bis 10.

12. Kompositformkörper nach Anspruch 11, **dadurch gekennzeichnet, dass** er die Form einer Platte, eines Blocks, eines Balken oder eines gegebenenfalls profilierten Strangs aufweist.

13. Verwendung eines Kompositformkörpers gemäß Anspruch 11 oder 12, zur Herstellung von Möbeln oder Möbelteilen oder von Verpackungsmaterialien oder als Material im Hausbau und Innenausbau.

## Claims

1. Mould release agent composition comprising at least one functionalized siloxane compound, containing alkyl or alkoxy group, of the general formula (I) 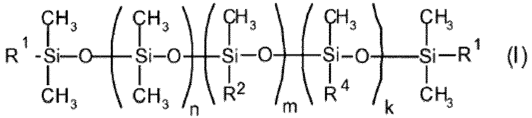 where
R¹ = identically or differently CH₃ and/or R²,
R² = identically or differently, preferably identically, -(CH₂)ₐ-NH-R³, -(O)ₓ-(CH₂)_{b}-NH-R^{3'}, -O_{y}-(CH₂)_{c}-OH and/or -O_{z}-(CH₂)_{d}-COOX¹,
X¹ = H, alkali metal, alkaline earth metal
R³, R^{3'} = independently of one another H or -(CH₂)ₑ-NH₂,
a, b, c, d, e = independently of one another 1 to 20,
x, y, z = independently of one another 0 or 1,
R⁴ = -(CH₂)_{f}-NH-(CH₂-CH₂-O)_{z}-R⁵ with
R⁵ = H, aryl radical or alkyl radical,
f = 1 to 20, preferably 2 to 5, more preferably 3,
z = 1 to 20, preferably 1 or 2 to 10,
n = 50 to 1000,
m = 0 to 20, preferably 1 to 5, with the ratio
m:n = 0 to 0.4, preferably 0.01 to 0.1,
k = 0 to 20, preferably 0 to 5,
with the proviso that there is at least one radical R² or R⁴, preferably at least one radical R²,
and at least one phosphate and/or phosphoric ester of the general formula (II) 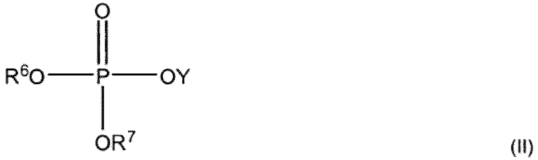 where
Y = R¹¹, H, metal, preferably alkali metal, more preferably Na or K, or alkaline earth metal, such as, for example, Mg, Ba, Sr or Ca, preferably Ca, NRₚH₄₋ₚ⁺, with p = 0 to 4, preferably 2 or 3, and
R = hydrocarbyl radical having 1 to 10, preferably 1 to 4, carbon atoms, or a radical of the formula (III) 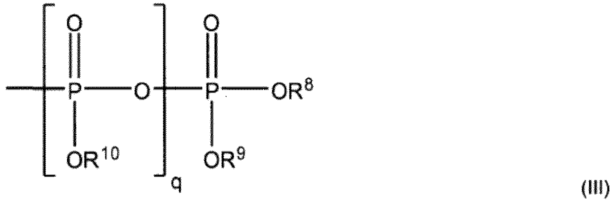
where
q = 0 to 5, and
R⁶ to R¹¹, independently of one another are hydrogen, a metal, preferably an alkali metal, such as, for example, sodium or potassium, or alkaline earth metal, such as, for example, Mg, Ba, Sr or Ca, preferably Ca, or NRₚH₄₋ₚ⁺ with p and R as described for formula II, or an organic radical.

2. Composition according to Claim 1, **characterized in that** mould release agents used comprise siloxane compounds of the general formula (I) in which R¹ is exclusively CH₃.

3. Composition according to Claim 1 or 2, **characterized in that** a, b, c, d and e independently of one another are 1 to 5.

4. Composition according to at least one of Claims 1 to 3, **characterized in that** n = 100 to 500.

5. Composition according to at least one of Claims 1 to 4, **characterized in that** the ratio of m:n = 0.01 to 0.1.

6. Composition according to at least one of Claims 1 to 5, **characterized in that** the composition is an emulsion which contains from 1 to 99 wt% of water, based on the overall composition.

7. Composition according to at least one of Claims 1 to 6, **characterized in that** the mass ratio of compounds of the formula (I) to compounds of the formula (II) is from 80:20 to 20:80.

8. Method for producing a composite moulding by continuous or discontinuous compression of a mass comprising at least one organic binder and at least one material which is in the form of chips, fibres, mats, powders or pellets, **characterized in that** the compressing takes place in the presence of a mould release agent composition according to any of Claims 1 to 7.

9. Method according to Claim 8, **characterized in that** binders used comprise isocyanates, polyisocyanates, urea/formaldehyde resins, phenol/formaldehyde resins, melamine/formaldehyde resins, epoxy (EP) resins, polyurethane resins, polyester resins and/or polylactide resins.

10. Method according to Claim 8 or 9, **characterized in that** the release agent composition is applied to the compression mould and/or to the mass that is to be pressed.

11. Composite moulding obtainable by a method according to any of Claims 8 to 10.

12. Composite moulding according to Claim 11, **characterized in that** it takes the form of a board, a block, a beam or an optionally profiled strand.

13. Use of a composite moulding according to Claim 11 or 12 for producing furniture or furniture parts or packaging materials, or as a material in house construction and interior outfitting.

## Revendications

1. Composition d'agent de démoulage contenant un compose de siloxane comprenant au moins un groupe alkyle ou alcoxy fonctionnalisé de formule générale (I) 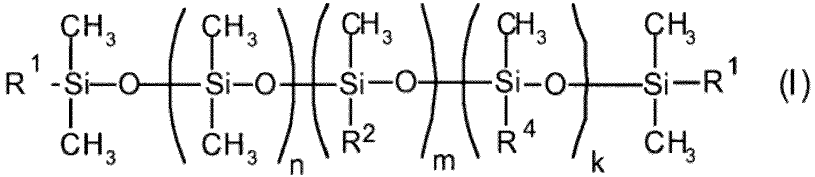 avec
les R¹ = de manière identique ou différente, CH₃ et/ou R2,
les R² = de manière identique ou différente, de préférence de manière identique, -(CH₂)ₐ-NH-R³, -(O)ₓ-(CH₂)_{b}-NH-R^{3'}, -O_{y}-(CH₂)_{c}-OH et/ou -O_{z}-(CH₂)_{d}-COOX¹,
X¹ = H, un métal alcalin, un métal alcalino-terreux,
R³, R^{3'} = indépendamment l'un de l'autre, H ou -(CH₂)ₑ-NH₂,
a, b, c, d, e = indépendamment les uns des autres, 1 à 20,
x, y, z = indépendamment les uns des autres, 0 ou 1,
R⁴ = -(CH₂)_{f}-NH-(CH₂-CH₂-O)_{z}-R⁵, avec
R⁵ = H, un radical aryle ou alkyle,
f = 1 à 20, de préférence 2 à 5, de manière particulièrement préférée 3,
z = 1 à 20, de préférence 1 ou 2 à 10,
n = 50 à 1 000,
m = 0 à 20, de préférence 1 à 5 avec le rapport m:n = 0 à 0,4, de préférence 0,01 à 0,1,
k = 0 à 20, de préférence 0 à 5,
à condition qu'au moins un radical R² ou R⁴, de préférence au moins un radical R², soit présent,
et au moins un phosphate et/ou un ester de l'acide phosphorique de formule générale (II) 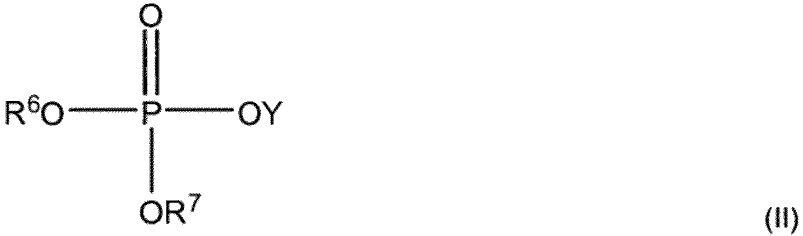 avec
Y = R¹¹, H, un métal, de préférence un métal alcalin, de préférence Na ou K, ou un métal alcalino-terreux, tel que p. ex. Mg, Ba, Sr ou Ca, de préférence Ca, NRₚH₄₋ₚ⁺,
avec p = 0 à 4, de préférence 2 ou 3, et R = radical hydrocarboné de 1 à 10, de préférence 1 à 4 atomes de carbone, ou un radical de formule (III) 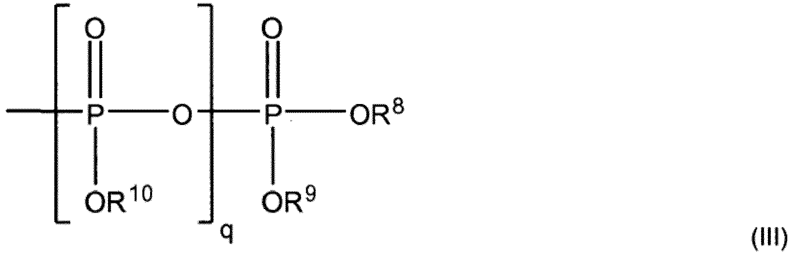
avec
q = 0 à 5, et
R⁶ à R¹¹ = indépendamment les uns des autres, l'hydrogène, un métal, de préférence un métal alcalin, tel que par exemple le sodium ou le potassium, ou un métal alcalino-terreux, tel que p. ex. Mg, Ba, Sr ou Ca, de préférence Ca, ou NRₚH₄₋ₚ⁺, avec p et R tels que décrits pour la formule II, ou un radical organique.

2. Composition selon la revendication 1, **caractérisée en ce que** des composés de siloxane de formule générale (I) dans lesquels R¹ représente exclusivement CH₃ sont utilisés en tant qu'agents de démoulage.

3. Composition selon la revendication 1 ou 2, **caractérisée en ce qu'**a, b, c, d, et e représentent indépendamment les uns des autres 1 à 5.

4. Composition selon au moins l'une quelconque des revendications 1 à 3, **caractérisée en ce que** n = 100 à 500.

5. Composition selon au moins l'une quelconque des revendications 1 à 4, **caractérisée en ce que** le rapport m:n = 0,01 à 0,1.

6. Composition selon au moins l'une quelconque des revendications 1 à 5, **caractérisée en ce que** la composition est une émulsion qui comprend 1 à 99 % en poids d'eau, par rapport à la composition totale.

7. Composition selon au moins l'une quelconque des revendications 1 à 6, **caractérisée en ce que** le rapport en masse entre les composés de formule (I) et les composés de formule (II) est de 80:20 à 20:80.

8. Procédé de fabrication d'un corps moulé composite par compression continue ou discontinue d'une masse contenant au moins un liant organique et au moins un matériau qui se présente sous la forme de copeaux, de fibres, de mats, de poudres ou de granulats, **caractérisé en ce que** la compression a lieu en présence d'une composition d'agent de démoulage selon l'une quelconque des revendications 1 à 7.

9. Procédé selon la revendication 8, **caractérisé en ce que** des isocyanates, des polyisocyanates, des résines d'urée/formaldéhyde, de phénol/formaldéhyde, de mélamine/formaldéhyde, d'époxyde (EP), de polyuréthane, de polyester et/ou de polylactide sont utilisés en tant que liant.

10. Procédé selon la revendication 8 ou 9, **caractérisé en ce que** la composition d'agent de démoulage est appliquée sur le moule de compression et/ou sur la masse à comprimer.

11. Corps moulé composite, pouvant être obtenu par un procédé selon l'une quelconque des revendications 8 à 10.

12. Corps moulé composite selon la revendication 11, **caractérisé en ce qu'**il présente la forme d'une plaque, d'un bloc, d'une barre ou d'un câble éventuellement profilé.

13. Utilisation d'un corps moulé composite selon la revendication 11 ou 12 pour la fabrication de meubles ou de parties de meubles ou de matériaux d'emballage ou en tant que matériau dans la construction de maisons et l'aménagement intérieur.
